**Europäisches Patentamt**

**European Patent Office**

**Office européen des brevets**

(11) Numéro de publication: **0 033 690**
**B1**

(19)

(12) **FASCICULE DE BREVET EUROPEEN**

(45) Date de publication du fascicule du brevet:
**15.06.83**

(51) Int. Cl.³: **B 60 T 8/18,** B 60 T 11/34

(21) Numéro de dépôt: **81400125.1**

(22) Date de dépôt: **28.01.81**

(54) Correcteur de freinage pour double circuit de freinage.

(30) Priorité: **30.01.80 FR 8002015**

(43) Date de publication de la demande:
**12.08.81 Bulletin 81/32**

(45) Mention de la délivrance du brevet:
**15.06.83 Bulletin 83/24**

(84) Etats contractants désignés:
**DE GB IT**

(56) Documents cités:
**FR-A-2 306 107**

(73) Titulaire: **SOCIETE ANONYME D.B.A., Centre Paris Pleyel, F-93521 St-Denis Cédex 01 (FR)**

(72) Inventeur: **Riquart, Christian, 33, rue Fessart, F-75019 Paris (FR)**
Inventeur: **Carré, Jean-Jacques, 100, Av. du Président Wilson, F-93100 Montreuil (FR)**

(74) Mandataire: **Poidatz, Emmanuel et al, Service Brevets Bendix 44 rue François 1er, F-75008 Paris (FR)**

## Correcteur de freinage pour double circuit de freinage

L'invention se rapporte aux valves correctrices de freinage pour double circuit de freinage de véhicule automobile, particulièrement destinées aux circuits de freinage dits en »X« dans lesquels deux sources de fluide sous pression — par exemple les deux chambres d'un maître-cylindre tandem — alimentent chacune un moteur de frein associé à une roue avant d'un côté du véhicule et un moteur de frein associé à une roue arrière de l'autre côté du véhicule et un moteur de frein associé à une roue arrière de l'autre côté du véhicule. Ces valves correctrices de freinage sont destinées à limiter et/ou réduire la pression admise aux moteurs de freins arrière lorsque la pression délivrée par le maître-cylindre dépasse une pression dite »de coupure« déterminée par les caractéristiques de la valve correctrice. Une telle valve est décrite dans la demande de brevet français N° 7 510 131.

En cas de défaillance de l'un des circuits, il se pose un problème important lorsqu'on désire effectuer un report de la pression de coupure dans le circuit intact; en effet, dans ce cas, la capacité de freinage étant pratiquement diminuée de moitié, il est nécessaire d'admettre au moteur de frein arrière associé au circuit intact une pression de freinage supérieure.

A cet effet, la présente invention propose un correcteur de freinage, pour double circuit de freinage de véhicule automobile, comprenant: un corps, deux alésages parallèles dans ledit corps définissant entre eux un axe de symétrie, chacun desdits alésages communiquant avec un orifice d'entrée et un orifice de sortie correspondants, deux pistons coulissant dans lesdits alésages, chacun desdits pistons commandant les déplacements d'un élément de valve contrôlant l'écoulement d'un fluide sous pression entre l'un desdits orifices d'entrée et l'orifice de sortie qui lui correspond, lesdits pistons présentant chacun une extrémité se projetant à l'extérieur dudit corps, et un ensemble répartiteur susceptible de générer, à partir d'une force de commande, deux forces pilotes agissant sur lesdites extrémités pour solliciter les pistons vers l'intérieur du corps dans le sens de l'établissement dudit écoulement de fluide, ledit fluide sous pression sollicitant les pistons vers l'extérieur du corps dans le sens de l'interruption de l'écoulement de fluide, caractérisé en ce que ledit ensemble répartiteur comprend: un couvercle solidaire dudit corps, deux poussoirs coulissant dans ledit couvercle parallèlement auxdits pistons et susceptibles de venir en butée avec les extrémités de ces derniers, des moyens diviseurs pour diviser ladite force de commande en deux demi-forces de commande égales appliquées chacune à l'un des deux poussoirs pour solliciter lesdits pistons vers l'intérieur dudit corps, des moyens élastiques pour engendrer une force de réaction opposée auxdites demi-forces de dommande, et un ensemble de transmission pour répartir ladite force de réaction en deux demi-forces de réaction appliquées chacune à l'un desdits poussoirs, chaque poussoir étant de ce fait soumis à deux forces opposées: une demi-force de commande et une demi-force de réaction dont la résultante constitue ladite force pilote, ledit ensemble de transmission comprenant deux éléments de transmission solidaires de chacun desdits poussoirs, l'un desdits éléments de transmission comportant deux projections radiales séparées axialement et l'autre desdits éléments de transmission comportant une projection radiale se projetant entre les projections radiales du premier élément de transmission et étant susceptible de venir en engagement avec l'une des deux projections radiales précitées lorsque le déplacement axial relatif entre les deux pistons dépasse une valeur prédéterminée.

On notera que l'invention permet de doubler la pression »de coupure« de l'un des circuits en cas de défaillance de l'autre circuit. En effet, dans ce cas, seul le piston associé au circuit intact est susceptible de se déplacer à l'encontre de la force pilote exercée par le poussoir correspondant. Comme expliqué en détail dans la description qui va suivre, il s'ensuit que les deux éléments de transmission viennent en contact mutuel, les deux forces pilote agissant alors conjointement sur le piston associé au circuit intact, et il en résulte un doublement de la pression »de coupure« de ce circuit.

Selon une autre caractéristique, les poussoirs du correcteur sont soumis à une pression de fluide provenant du circuit hydraulique de suspension du véhicule lorsque celui-ci possède un tel circuit de suspension.

Ceci permet d'asservir de manière simple le fonctionnement du correcteur à l'état de charge du véhicule en évitant les problèmes liés aux transmissions mécaniques entre parties suspendues et non-suspendues du véhicule comme bien connu des spécialistes.

L'invention sera maintenant décrite en se référant aux dessins annexés dans lesquels:

La Figure 1 est une vue en coupe longitudinale d'une valve correctrice de freinage selon l'invention; et

La Figure 2 est une vue en coupe partielle de la valve correctrice représentée à la Figure 1, prise suivant la ligne II-II.

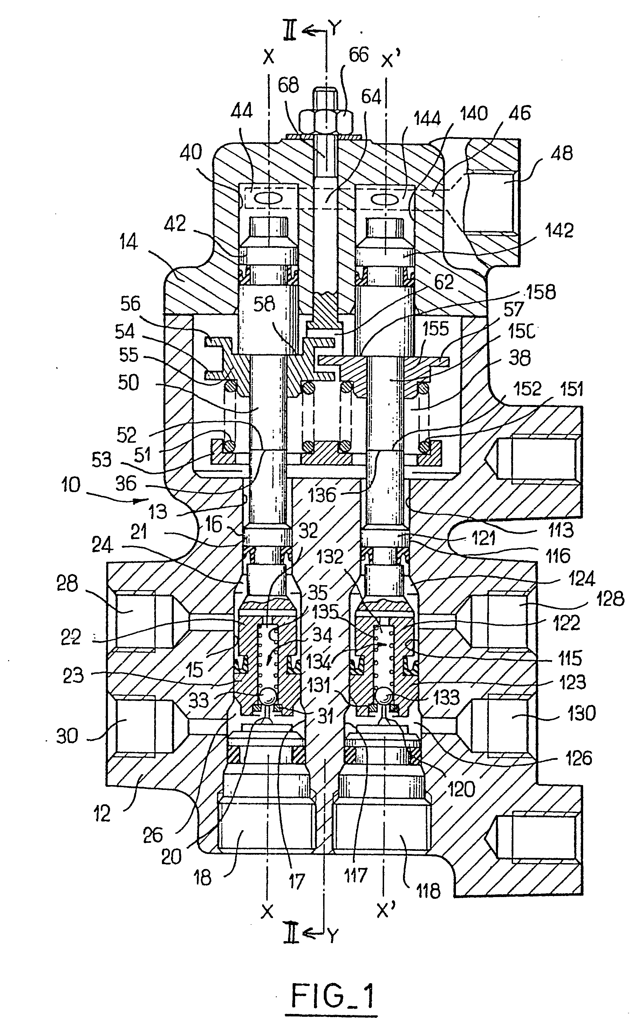

Si l'on considère la Figure 1, un correcteur (10) pour double circuit de freinage comprend un corps (12), fermé à sa partie supérieure par un couvercle (14), et dans lequel sont réalisés deux alésages étagés identiques (16, 116) à axes parallèles XX (ou X'X') et ayant un axe de symétrie général YY. Chaque alésage (16, 116) comprend une portion de petit diamètre (13, 113), une portion de diamètre moyen (15, 115) et une portion de grand diamètre (17, 117) fermée par un bouchon (18, 118) comportant un têton

(20, 120) dont le rôle sera précisé ultérieurement. Dans chaque alésage (16, 116) est monté un piston étagé (22, 122) dont la portion de petit diamètre (21, 121) coulisse dans la portion de petit diamètre (13, 113) de l'alésage et dont la portion de grand diamètre (23, 123) coulisse dans la portion de diamètre moyen (15, 115) de l'alésage. Le piston (22, 122) définit avec l'alésage (16, 116) d'une part entre ses portions (21, 121 et 23, 123) une première chambre dite chambre d'entrée (24, 124) et d'autre part entre la portion (23, 123) et le bouchon (18, 118) une seconde chambre dite chambre de sortie (26, 126). La chambre d'entrée (24, 124) est reliée par l'intermédiaire d'un orifice d'entrée (28, 128) à une source de pression hydraulique de freinage indépendante (non représentée), et la chambre de sortie (26, 126) est reliée par l'intermédiaire d'un orifice de sortie (30, 130) à un jeu de moteurs de freins du véhicule (également non représentés). Les sources de pression indépendantes sont réalisées à titre d'exemple par un maître-cylindre tandem classique d'un quelconque type connu.

Le piston (22, 122) est percé d'un passage (32, 132) comprenant une partie axiale et une partie radiale, dans lequel est disposée une valve à bille (34, 134) composée d'un siège annulaire (31, 131), d'une bille (33, 133) et d'un ressort (35, 135).

Enfin, l'extrémité supérieure (36, 136) du piston (22, 122) se projette dans une cavité (38) ménagée à la partie supérieure du corps (12) fermée par le couvercle (14).

Le couvercle (14) est percé de deux alésages borgnes parallèles (40, 140) dans lesquels coulissent deux poussoirs identiques (42, 142) définissant avec lesdits alésages borgnes deux chambres de commande (44, 144) reliées l'une à l'autre par un passage (46) qui débouche dans un orifice (48) relié au système de suspension hydraulique du véhicule (non représenté) de telle sorte qu'il règne dans les deux chambres de commande (44, 144) une pression $P_h$ représentative de la charge supportée par l'essieu arrière du véhicule.

Les poussoirs (42, 142) comportant à leurs extrémités inférieures des prolongements de diamètre réduit (50, 150) dont les extrémités (52, 152) sont en contact avec les extrémités (36, 136) des pistons (22, 122).

Dans la cavité (38) sont placés deux ressorts de réaction (51, 151) emprisonnés entre une plaque de butée (53) et deux éléments de transmission (55, 155) respectivement. Ces derniers ont sensiblement la forme de deux fourreaux entourant les prolongements (50, 150) des poussoirs (42, 142) et en butée contre des épaulements (58, 158) prévus sur ces derniers. L'élément de transmission (55) comporte deux projections radiales annulaires (54) et (56) séparés axialement, tandis que l'élément de transmission (155) comporte une projection radiale annulaire (57) se projetant entre les projections radiales (54) et (56).

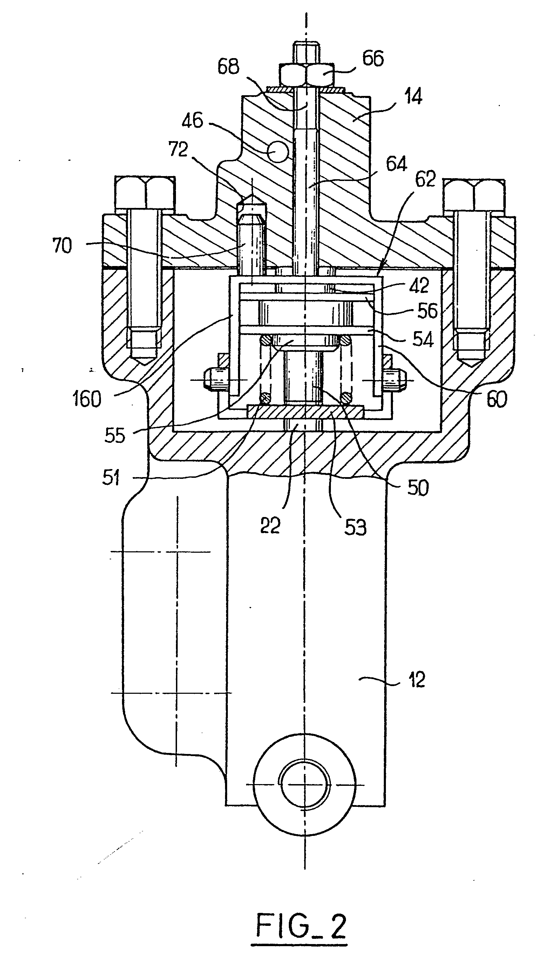

En dernier lieu, la position axiale de la plaque (53) peut être ajustée de la manière suivante: cette plaque est montée pivotante par rapport aux deux bras (60, 160) d'un étrier (62) (voir Figure 2), l'axe de pivotement étant situé entre la plaque (53) et les éléments de transmission (55, 155), et une liaison de longueur réglable est prévue entre l'étrier (62) et le couvercle (14), cette liaison comprenant une tige (64), fixée à l'étrier (62) et traversant le couvercle (14), et un écrou (66) vissé sur l'extrémité filetée (68) de la tige (64). De plus, l'étrier comporte une saillie cylindrique (70) engagée dans un perçage (72) du couvercle (14), cette disposition empêchant toute rotation de l'étrier (62) et de la plaque (53) autour de l'axe de symétrie YY.

Le couvercle (14), les chambres de commande (44, 144) et les poussoirs (42, 142) constituent des moyens diviseurs destinés à diviser une force de commande en deux demi-forces de commande appliquées chacune à l'un des poussoirs (42, 142).

En outre, l'ensemble regroupant ces moyens diviseurs, les ressorts de réaction (51, 151), la plaque de butée (53) et les éléments de transmission (55, 155) constitue un ensemble répartiteur susceptible de générer, à partir de cette force de commande, deux forces pilotes sollicitant les deux pistons (22, 122) dans le sens tendant à provoquer l'ouverture des valves à bille (34, 134), comme il apparaîtra à la lecture de la description, ci-après, du fonctionnement du correcteur qui vient d'être décrit.

Si l'on suppose le véhicule immobile et en l'absence de toute action de freinage, il règne une faible pression résiduelle aux orifices d'entrée (28, 128) et aux orifices de sortie (30, 130). La pression Ph régnant dans le circuit hydraulique de suspension est transmise à l'orifice (48) et, par le passage, (46) aux chambres de commande (44, 144). Cette pression, dite de commande, exerce sur les poussoirs (42, 142) une force de commande $F_c$ divisée en deux demi-forces de commande $F_c/2$ dirigées vers le bas, si l'on considère la Figure 1. L'ensemble chambres de commande, poussoirs constitue des moyens diviseurs pour diviser la force de commande en deux demi-forces de commande égales $F_c/2$ qui repoussent les pistons (22, 122) en butée contre les bouchons (18, 118) de telle sorte que les tétons (20, 120) dégagent les billes (33, 133) de leurs sièges (31, 131).

Par ailleurs, les ressorts (51 et 151) exercent sur les éléments de transmission (55 et 155) et, par conséquent sur les poussoirs (42, 142) deux forces de rappel égales R. Les deux poussoirs (42, 142) exercent donc sur les pistons (22, 122) deux forces pilotes égales $F_p$.

Lors d'une action de freinage normale, il règne aux orifices (28, 128) des pressions d'entrée sensiblement égales. Les valves (34, 134) étant ouvertes, ces pressions d'entrée sont transmises aux orifices de sortie (30, 130) où il règne par conséquent des pressions de sortie sensiblement égales entre elles et égales aux pressions d'entrée. De ce fait, les pistons 22 et 122 sont soumis à des forces dirigées vers le haut.

Tant que ces forces sont inférieures aux forces pilotes $F_p$, les deux pistons restent immobiles, les valves (34, 134) restent ouvertes et les pressions de sortie restent égales aux pressions d'entrée.

Par contre, lorsque les pressions d'entrée atteignent une pression dite »de coupure« $P_c$, les pistons (22, 122) sont alors suceptibles de se déplacer simultanément vers le haut, provoquant la fermeture des valves à bille (34, 134). Lorsque les pressions d'entrée dépassent cette valeur $P_c$, les pressions de sortie sont corrigées de telle sorte que l'accroissement de la pression de sortie soit proportionnellement inférieur à celui de la pression d'entrée, et ce, de manière identique pour les deux circuits, comme il est bien connu dans la technique.

Il va de soi que l'on peut choisir, en variante de l'invention, des pistons de section efficace constante, cette variante fonctionnant alors en simple limiteur de pression, la pression de sortie étant alors limitée à une valeur fixe pour une charge donnée du véhicule.

On remarque que la pression de coupure $P_c$ dépend d'une part de l'ajustement de la force de réaction R grâce à l'ensemble tige (64) — écrou (66) et d'autre part de la charge du véhicule; en effet, la pression $P_h$ étant directement liée à cette charge, il en est de même pour la force de commande $F_c$.

En cas de défaillance de l'un des circuits de freinage, l'appareil décrit fonctionne de la manière suivante:

On suppose qu'il y a, par exemple, absence de pression d'entrée à l'orifice (128). Tant que la pression d'entrée régnant à l'orifice (28), reste inférieure à $P_c$, le piston (22) reste immobile, les éléments de l'appareil occupent les positions qu'ils occupent normalement et la pression de sortie à l'orifice (30) est égale à la pression d'entrée comme précédemment.

Par contre, lorsque la pression d'entrée atteint la valcur $P_c$, le piston (22) commence à se déplacer vers le haut, tandis que le piston (122) reste immobile, en butée sur le bouchon (118). Avant que la valve (34) ne se ferme, la projection radiale annulaire (54) de l'élément de transmission (55) vient engager la projection radiale (57) de l'élément de transmission (155). Il s'ensuit que la force pilote $F_p$ que le poussoir (142) exerçait auparavant sur le piston (122) est alors transmise au poussoir (42), lequel exerce alors une force pilote double, $2 \times F_p$, sur le piston (22).

Le piston (22) ne peut donc plus se déplacer vers le haut tant que la pression d'entrée n'atteint pas une nouvelle valeur $P'_c$ double de $P_c$, et la pression de sortie reste égale à la pression d'entrée. Ce n'est que lorsque la pression d'entrée atteint la valeur $P'_c$ que le piston peut à nouveau se déplacer vers le haut et que la pression de sortie subit un effet de limitation par actionnement de la valve (34) comme déjà expliqué. En cas de défaillance de l'autre circuit de freinage, le système fonctionne de manière symétrique.

En résumé, en cas de défaillance de l'un des circuits de freinage, la valve correctrice selon l'invention permet de doubler la pression de coupure dans le circuit intact et par conséquent d'augmenter la capacité de freinage de la roue arrière alimentée par ce circuit.

Dans des variantes non représentées de l'invention, la pression $R_h$ peut être obtenue au moyen d'un générateur quelconque sensible à la charge du véhicule.

On pourra également remarquer que la pression $P_h$ peut être une pression fixe, les caractéristiques du correcteur étant alors indépendantes de la charge du véhicule.

De plus, la force de commande $F_c$ et les demi-forces de commande $F_c/2$ peuvent être engendrées par un système mécanique asservi ou non à la charge du véhicule, notamment deux ressorts montés en parallèle et agissant séparément sur chaque poussoir.

**Revendications**

1. Correcteur de freinage (10) pour double circuit de freinage de véhicule automobile, comprenant: un corps (12), deux alésages parallèles (16, 116) dans ledit corps définissant entre eux un axe de symétrie (YY), chacun desdits alésages communiquant avec un orifice d'entrée (28, 128) et un orifice de sortie (30, 130) correspondants, deux pistons (22, 122) coulissant dans lesdits alésages, chacun desdits pistons commandant les déplacements d'un élément de valve (34, 134) contrôlant l'écoulement d'un fluide sous pression entre l'un desdits orifices d'entrée et l'orifice de sortie qui lui correspond, lesdits pistons présentant chacun une extrémité (36, 136) se projetant à l'extérieur dudit corps, et un ensemble répartiteur (14, 42, 142, 44, 144, 51, 151, 53, 55, 155) susceptible de générer, à partir d'une force de commande (Fc), deux forces pilotes (Fp) agissant sur lesdits extrémités pour solliciter les pistons vers l'intérieur du corps dans le sens de l'établissement dudit écoulement de fluide, ledit fluide sous pression sollicitant les pistons vers l'extérieur du corps dans le sens de l'interruption de l'écoulement de fluide, caractérisé en ce que ledit ensemble répartiteur comprend: un couvercle (14) solidaire dudit corps (12), deux poussoirs (42, 142) coulissant dans ledit couvercle parallèlement auxdits pistons et susceptibles de venir en butée avec les extrémités de ces derniers, des moyens diviseurs (42, 142, 44, 144) pour diviser ladite force de commande (Fc) en deux demi-forces de commande (Fc/2) égales appliquées chacune à l'un des deux poussoirs pour solliciter lesdits pistons vers l'intérieur dudit corps, des moyens élastiques (51, 151) pour engendrer une force de réaction (R) opposée auxdites demi-forces de commande et un ensemble de transmission (55, 155) pour répartir ladite force de réaction en deux demi-forces de réaction (R/2) appliquées chacune à l'un desdits poussoirs, chaque poussoir étant de ce fait soumis à deux forces opposées: une demi-force de commande et une demi-force de réaction dont la résultante constitue ladite force pilote, ledit ensemble de transmission (55, 155) comprenant deux éléments de transmission (55, 155) solidaires de chacun desdits poussoirs, l'un desdits éléments de transmission (55) comportant deux projections radiales (54, 56) séparées axialement et l'autre desdits éléments de transmission (155) comportant une projection radiale (57) se projetant entre les projections radiales du premier élément de transmission et étant susceptible de venir en engagement avec l'une des deux projections radiales précitées orsque le déplacement axial relativ entre les deux pistons dépasse une valeur prédéterminée.

2. Correcteur de freinage selon la revendication 1, pour lequel la force de commande (Fc) est générée par une pression de commande (Ph), caractérisé en ce que lesdits moyens diviseurs (42, 142, 44, 144) comprennent une chambre de commande (44, 144) définie dans ledit couvercle (14) et dans laquelle règne la pression de commande (Ph), lesdits poussoirs (42, 142) se projetant de façon étanche dans ladite chambre de commande (44, 144).

3. Correcteur de freinage selon la revendication 2, pour un véhicule comportant un circuit de suspension hydraulique, caractérisé en ce que ladite pression de commande est une pression provenant dudit circuit de suspension hydraulique.

4. Correcteur de freinage selon l'une quelconque des revendications 1 à 3, caractérisé en ce que lesdits moyens élastiques (51, 151) comprennent deux ressorts de réaction (51, 151) comprimés entre une plaque de butée (53) et l'un et l'autre desdits éléments de transmission (55, 155), lesdits ressorts engendrant sur ces derniers deux demiforces de réaction (R/2) dont la résultante est coaxiale à l'axe de symétrie (YY).

5. Correcteur de freinage selon la revendication 4, caractérisé en ce que ladite plaque de butée (53) comporte des moyens de positionnement axial réglables (60, 160, 62, 64, 66, 68), comprenant un étrier (62) en forme de U, ladite plaque de butée étant montée pivotante par rapport aux bras (60, 160) dudit étrier, une liaison de longueur réglable (64, 66, 68) étant prévue entre ledit étrier (62) et ledit couvercle (14).

6. Correcteur de freinage selon l'une quelconque des revendications 3 à 5, caractérisé en ce que lesdits poussoirs (42, 142) comportent chacune une partie de grand diamètre et un prolongement de diamètre réduit (50, 150) séparés par un épaulement plan (58, 158), lesdits éléments de transmission axant sensiblement la force de fourreaux entourant lesdits prolongements de diamètre réduit et en butée contre lesdits épaulements plans.

## Patentansprüche

1. Vorrichtung zur Anpassung der Bremskraft (10) für eine Zweikreisbremsanlage eines Kraftfahrzeuges, mit einem Gehäuse (12), zwei parallelen Bohrungen (16, 116) im Gehäuse, die zwischen sich eine Symmetrieachse (YY) definieren, wobei jede der Bohrungen mit einer entsprechenden Einlaßöffnung (28, 128) und einer entsprechenden Auslaßöffnung (30, 130) in Verbindung steht, zwei Kolben (22, 122), die in den Bohrungen gleiten, wobei jeder der Kolben die Verschiebung eines Ventilelementes (34, 134) steuert, das die Strömung eines Druckmittels zwischen einer der Einlaßöffnungen und der zugehörigen Auslaßöffnung steuert, wobei die Kolben jeweils ein aus dem Gehäuse nach außen vorstehendes Ende (36, 136) aufweisen, und einer Verteilereinrichtung (14, 42, 142, 44, 144, 51, 151, 53, 55, 155), die ausgehend von einer Steuerkraft (Fc) zwei Führungskräfte (Fp) erzeugt, die auf die besagten Enden einwirken, um die Kolben in Richtung auf das Innere des Gehäuses im Sinne einer Freigabe der Strömung vorzuspannen, während das Durckmittel die Kolben in Richtung aus dem Gehäuse heraus im Sinne einer Unterbrechung der Strömung vorspannt, dadurch gekennzeichnet, daß die Verteilereinrichtung aufweist: einen Deckel (14), der mit dem Gehäuse (12) fest verbunden ist, zwei Stößel (42, 142), die in dem Deckel parallel zu dem Kolben gleiten und mit den Enden der Kolben in Anlage bringbar sind, Teilermittel (42, 142, 44, 144) die dazu dienen die Steuerkraft (Fc) in zwei gleiche Steuerteilkräfte (Fc/2) aufzuteilen, die jeweils an einem der beiden Stößel angreifen, um die Kolben in Richtung auf das Innere des Gehäuses vorzuspannen, elastische Mittel (51, 151) zur Erzeugung einer Reaktionskraft (R), die den Steuerteilkräften entgegengerichtet ist, und eine Übertragungseinrichtung (55, 155) die dazu dient, die Reaktionskraft auf zwei Reaktionsteilkräfte (R/2) aufzuteilen, die jeweils an einem der Stößel angreifen, so daß jeder Stößel zwei entgegengerichteten Kräften ausgesetzt ist: einer Steuerteilkraft und einer Reaktionsteilkraft, deren Resultierende die besagte Führungskraft bildet, wobei die Übertragungseinrichtung (55, 155) zwei Übertragungselemente (55, 155) aufweist, die mit jedem der Stößel fest verbunden ist, wobei das eine der Übertragungselemente (55) zwei radiale, axial getrennte Vorsprünge (54, 56) trägt und das andere Übertragungselement (155) einen radialen Vorsprung (57) trägt, der zwischen die radialen Vorsprünge des ersten Übertragungselementes ragt und mit dem einen der zuerst genannten radialen Vorsprünge in Anlage bringbar ist, wenn die relative Axialverschiebung zwischen den Kolben einen vorgegebenen Wert überschreitet.

2. Vorrichtung nach Anspruch 1, bei der die Steuerkraft (Fc) durch einen Steuerdruck (Ph) erzeugt wird, dadurch gekennzeichnet, daß die Teilermittel (42, 142, 44, 144) eine Steuerkammer (44, 144) aufweisen, die in dem Deckel (14) gebildet ist und in der der Steuerdruck (Ph) herrscht, wobei die Stößel (42, 142) abgedichtet in die Steuerkammer (44, 144) ragen.

3. Vorrichtung nach Anspruch 2 für ein Fahrzeug mit einem hydraulischen Aufhängungskreis, dadurch gekennzeichnet, daß der Steuerdruck ein Druck ist, der von dem hydraulischen Aufhängungskreis herrührt.

4. Vorrichtung nach einem der Ansprüche 1 bis 3, dadurch gekennzeichnet, daß die elastischen Mittel (51, 151) aus zwei Reaktionsfedern (51, 151) bestehen, die zwischen eine Anschlagplatte (53) und dem einen sowie dem anderen der Übertragungselemente (55, 155) zusammengedrückt werden, wobei diese Federn auf die Übertragungselemente zwei Reaktionskräfte (R2) ausüben, deren Resultierende koaxial zur Symmetrieachse (YY) verläuft.

5. Vorrichtung nach Anspruch 4, dadurch gekennzeichnet, daß die Anschlagplatte (53) axial verstellbare Positionierungsmittel (60, 160, 62, 64, 66, 68) aufweist, die einen U-förmigen Bügel (62) umfassen, wobei die Anschlagplatte bezüglich den Armen (60, 160) des Bügels schwenkbar angebracht ist, wobei zwischen dem Bügel (62) und dem Deckel (14) eine in der Länge verstellbare Verbindung (64, 66, 68) vorgesehen ist.

6. Vorrichtung nach einem der Ansprüche 3 bis 5, dadurch gekennzeichnet, daß die Stößel (42, 142) jeweils einen Abschnitt großen Durchmessers und eine Verlängerung verringerten Durchmessers (50, 150) aufweisen, die durch eine ebene Schulter (58, 158) getrennt sind, wobei die Übertragungselemente im wesentlichen die Form von Hüllen haben, die die Verlängerungen verringerten Durchmessers umgeben und an den ebenen Schultern anliegen.

**Claims**

1. Brake adjusting device for dual brake circuits of a vehicle comprising a body (12), two parallel bores (16, 116) in said body defining between them an axis of symmetry (YY), each of said bores communicating with a corresponding inlet port (28, 128) and outlet port (30, 130), two pistons (22, 122) slidable in said bores, controlling the displacements of a valve member (34, 134) controlling the flow of a pressure fluid between one of said inlet ports and the outlet port corresponding thereto, each of said pistons having an end portion (36, 136) which projects outwardly of said body, and a distributor assembly (14, 42, 142, 44, 144, 51, 151, 53, 55, 155) which is capable of generating, from an actuating force (Fc), two pilot forces (Fp) acting on said end portions to urge the pistons inwardly of the body in the direction of establishing said flow of fluid, said pressure fluid urging the pistons outwardly of the body in the direction of interrupting the flow of fluid, characterized in that said distributor assembly comprises, a cover (14) which is fixed with respect to said body (12), two thrust members (42, 142) which are slidable in said cover parallel to said pistons and capable of coming into abutment with the end portions of said pistons, dividing means (42, 142, 44, 144) for dividing said actuating force (Fc) into two equal actuating half-forces (Fc/2) which are each applied to one of the two thrust members for urging said pistons inwardly of said body, resilient means (51, 151) for producing a reaction force (R) opposed to said actuating half-forces, and a transmission assembly (55, 155) for distributing said reaction force in the form of two reaction half-forces (R/2) each applied to one of said thrust members, whereby each thrust member is subjected to two opposite forces: an actuating half-force, and a reaction half-force, the resultant of which constitutes said pilot force, said transmission assembly (55, 155) comprising two transmission elements (55, 155) which are fixed with respect to each of said thrust members, one of said transmission elements (55) comprising two axially separated radial projections (54, 56) and the other said transmission elements (155) comprising a radial projection (57) which projects between the radial projections of the first transmission element and being capable of coming into engagement with one of said two radial projections when the relative axial displacement between the two pistons exceeds a predetermined value.

2. A brake adjusting device according to claim 1, wherein the actuating force (Fc) is generated by an actuating pressure (Ph), characterized in that said dividing means (42, 142, 44, 144) comprise an actuating chamber (44, 144) defined in said cover (14) and wherein prevails the actuating pressure (Ph), said thrust members (42, 142) sealingly projecting into said actuating chamber (44, 144).

3. A brake adjusting device according to claim 2 for a vehicle comprising a hydraulic suspension circuit, characterized in that said actuating pressure is a pressure from said hydraulic suspension circuit.

4. A brake adjusting device according to anyone of claims 1 to 3, characterized in that said resilient means (51, 151) comprise two reaction springs (51, 151) which are compressed between an abutment plate (53) and respective ones of said transmission members (55, 155), said springs producing on said transmission members two reaction halfforces (R/2), the resultant of which is coaxial with the axis of symmetry (YY).

5. A brake adjusting device according to claim 4, characterized in that said abutment plate (53) comprises adjustable axial positioning means (60, 160, 62, 64, 66, 68) comprising a U-shaped stirrup-like member (62), said abutment plate being mounted pivotally with respect to the arms (60, 160) of said stirrup-like member, a connecting means of ajdustable length (64, 66, 68) being provided between said stirrup-like member, a connecting means of adjustable length (64, 66, 68) being provided between said stirrup-like members (62) and said cover (14).

6. A brake adjusting device according to anyone of claims 3 to 5, characterized in that said thrust members (42, 142) each comprise a large-diameter portion and a reduced-diameter extension portion (50, 150) which are separated by a flat shoulder (58, 158), said transmission members being substantially in the form of sheaths disposed around said reduced-diameter extension portions and bearing against said flat shoulders.

FIG_1

FIG_2